# EUROPÄISCHE PATENTSCHRIFT

(11) **EP 2 339 171 B1**
(45) Veröffentlichungstag und Bekanntmachung des Hinweises auf die Patenterteilung: **15.02.2017**
(21) Anmeldenummer: 10015722.1
(22) Anmeldetag: 16.12.2010
(51) Int. Cl.: F03D 1/06

(54) **Rotorblatt für eine Windkraftanlage**
Rotor blade for a wind power converter
Pale pour une éolienne

(30) Priorität: 22.12.2009 DE 102009060650
(43) Veröffentlichungstag der Anmeldung: 29.06.2011
(73) Patentinhaber: Mickeler, Siegfried, 97422 Schweinfurt (DE); Keller, Walter, 66994 Dahn (DE)
(72) Erfinder: Mickeler, Siegfried, 97422 Schweinfurt (DE); Keller, Walter, 66994 Dahn (DE)
(74) Vertreter: Patentanwälte Dr. Keller, Schwertfeger

(56) Entgegenhaltungen:
- WO-A1-2008/070917
- DE-A1- 10 300 284
- DE-A1-102009 025 857
- GB-A- 2 265 672
- US-A1- 2009 123 289
- P. Giguère ET AL: "Design of a Tapered and Twisted Blade for the NREL Combined Experiment Rotor", Urbana, Illinois, 30. April 1999 (1999-04-30), Seite 16, XP055073752, Springfield, VA22161 Gefunden im Internet: URL:http://wind.nrel.gov/amestest/BladeDes ign.pdf [gefunden am 2013-07-31]

## Beschreibung

Die Erfindung betrifft ein Rotorblatt für eine Windkraftanlage gemäß dem Oberbegriff des Patentanspruchs 1 und eine Windkraftanlage gemäß dem Oberbegriff des Patentanspruchs 22.

Bei der Nutzung regenerativer Energien zur Energieerzeugung gewinnt die Windkraft als Energiequelle eine immer größer werdende Bedeutung. Der Grund hierfür liegt in der Begrenztheit der Primärrohstoffvorkommen, die bei steigendem Energiebedarf zu einer Verknappung und damit einhergehenden Verteuerung der daraus gewonnenen Energie führt. Hinzu kommt, dass Primärrohstoffe bei ihrer Umwandlung in Energie einen beträchtlichen CO₂-Ausstoß bedingen, der als Ursache für einen in den letzten Jahren rasch voranschreitenden Klimawandel erkannt worden ist. Auf Seiten der Bevölkerung ist daher ein Bewusstseinswandel hin zur Nutzung regenerativer Energien eingetreten.

Zur Energieerzeugung bekannte Windkraftanlagen bestehen aus einem Turm, an dessen Ende ein Rotor mit radial ausgerichteten Rotorblättern drehbar gelagert ist. Der auf die Rotorblätter auftreffende Wind versetzt den Rotor in eine Rotationsbewegung, die einen mit dem Rotor gekoppelten Generator zur Stromerzeugung antreibt. Durch ein entsprechend aerodynamisches Design der Rotorblätter ist man dabei bestrebt, einen möglich großen Wirkungsgrad zu erzielen, d.h. die dem Wind innewohnende kinetische Energie mit möglichst geringen Verlusten in elektrische Energie umzuwandeln. Ein Beispiel für eine solche Windkraftanlage ist in der DE 103 00 284 A1 beschrieben.

Der Nutzung der Windkraft als Energiequelle sind dennoch Grenzen gesetzt. So ist deren Wirtschaftlichkeit nur bei ausreichender Windstärke und Windhäufigkeit gegeben. Geeignete Flächen zur Errichtung von Windkraftanlagen stehen daher nur begrenzt zur Verfügung. Weitere Beschränkungen in der Standortwahl ergeben sich aus den von Windkraftanlagen ausgehenden Beeinträchtigungen der Umwelt. Vor allem Lärmemissionen führen dazu, dass Windkraftanlagen nicht in beliebiger Nähe von besiedelten Gebieten errichtet werden dürfen, sondern es wird durch Einhaltung eines vorbestimmten Abstandes sicher gestellt, dass gesetzlich vorgeschriebene Grenzwerte nicht überschritten werden. Um grundsätzlich geeignete Standorte bestmöglich nutzen zu können, besteht seitens der Betreiber von Windkraftanlegen ein großes Interesse an geräuscharmen Windkraftanlagen, um den Abstand zu besiedelten Gebieten verringern und damit die nutzbare Standortfläche vergrößern zu können.

Die Hauptursache für die Geräuschentwicklung bei Windkraftanlagen liegt in der Umströmung der aerodynamisch geformten Rotorblätter, wobei der von Rotordurchmesser und Drehzahl abhängigen Anströmgeschwindigkeit eine entscheidende Bedeutung zukommt. Moderne Windkraftanlagen mit einem Durchmesser von 40 m bis 80 m und einer Schnelllaufzahl zwischen 6 und 7 besitzen Schallleistungspegel in einer Größenordnung zwischen 100 dB(A) und 105 dB(A), die einen Abstand zu besiedelten Gebieten in einer Größenordnung von 200 m bis 300 m erforderlich machen, um dort beispielsweise einen Grenzwert von 45 dB(A) einzuhalten.

Es hat daher nicht an Bestrebungen gefehlt, die Geräuschentwicklung von Windkraftanlagen zu reduzieren. So schlägt die bereits eingangs erwähnte DE 103 00 284 A1 zur Verringerung von Schallemissionen vor, die Hinterkante eines Rotorblatts in der Rotorblattebene abgewinkelt oder abgebogen auszubilden. Dadurch lösen sich die Luftwirbel an der abgewinkelten bzw. abgebogenen Rotorblatthinterkante mit zeitlichem Versatz, was zu einer Verringerung der Schallemissionen führt.

Aus der WO 00/34651 ist eine gattungsgemäße Windkraftanlage mit horizontaler Rotorachse bekannt. Ausgehend von der Annahme, dass das Rotorblatt die Hauptschallquelle darstellt, wird dort zur Schallreduzierung vorgeschlagen, die Oberfläche des Rotorblatts mit einer bestimmten Rauhigkeit zu versehen. Die Rauhigkeit kann durch Beschichtungen oder Aufkleben von Folien auf die Blattoberfläche erreicht werden.

In der DE 10 2005 019 905 As wird beschrieben, dass die beim Betrieb von Windkraftanlagen auftretenden strömungsbedingten Geräusche von der Umströmungsgeschwindigkeit abhängig sind und daher der Blattspitze eines Rotorblatts aufgrund der dort größten Umfangsgeschwindigkeit eine besondere Bedeutung zukommt. Zur Beeinflussung der Umströmung und damit der Schallentwicklung wird vorgeschlagen, die Oberfläche des Rotorblatts zumindest teilweise porig auszubilden.

Die WO 95/19500 nennt als Ursache für Lärmemissionen bei Windkraftanlagen neben dem Getriebe ebenfalls die luftumströmten Rotorblätter. Durch Druckdifferenzen zwischen Saug- und Druckseite des Rotorblattprofils kommt es zu Verwirbelungen und unter Umständen zu Strömungsablösungen an der Hinterkante der Rotorblätter, die mit einer entsprechenden Schallentwicklung verbunden sind. Um die dadurch bedingten Schallemissionen zu reduzieren wird vorgeschlagen, die Hinterkante der Rotorblätter aus einem nachgiebigen Material herzustellen, so dass vorhandene Druckdifferenzen zwischen Saug- und Druckseite durch elastische Verformung der Hinterkante wenigstens teilweise ausgeglichen werden können.

Auch die EP 0 652 367 A1 sieht zur Reduzierung von Schallemissionen bei Windkraftanlagen eine Modifizierung der Hinterkante des Blattprofils vor. Dazu besitzt die Hinterkante einen unregelmäßig geformten Verlauf, insbesondere eine sägezahnartige Ausbildung. Weitere Beispiele aus dem Stand der Technik sind aus DE102009025857 sowie US2009123289 bekannt.

Vor diesem Hintergrund liegt der Erfindung die Aufgabe zugrunde, Rotorblätter für Windkraftanlagen anzugeben, die ohne nennenswerte Leistungseinbußen bei der Energiegewinnung sich durch reduzierte Schallemissionen auszeichnen.

Diese Aufgabe wird durch ein Rotorblatt mit den Merkmalen des Patentanspruchs 1 sowie einer Windkraftanlage mit den Merkmalen des Patentanspruchs 21 gelöst.

Vorteilhafte Ausführungsformen ergeben sich aus den Unteransprüchen.

Die Erfindung beruht auf dem Gedanken, in Abkehr von der gängigen Praxis zur Schallverminderung die Blatttiefe t im äußeren Blattendbereich eines erfindungsgemäßen Rotorblatts nicht oder nur geringfügig zurückzunehmen, während gleichzeitig der cₐ-Wert des Blattprofils in diesem Bereich durch geeignete Vorkehrungen reduziert wird. Dabei geht die Erfindung davon aus, dass mit der Reduzierung des cₐ-Werts - im Gegensatz zur Reduzierung der Blatttiefe t - eine überproportionale Schallreduzierung möglich ist. Die damit einhergehenden sehr geringen Leistungsverluste werden dabei bewusst in Kauf genommen. Zwar ist mit größeren Blatttiefen t auch ein Schallzuwachs verbunden, der sich jedoch nicht in dem Maße auswirkt wie die Schallreduzierung infolge des erfindungsgemäß reduzierten cₐ-Werts, so dass eine im Sinne der Erfindung positive Schallbilanz bleibt. Während durch die erfindungsgemäßen Maßnahmen also die Schallemissionen deutlich verringert werden, bleibt die Energieausbeute einer erfindungsgemäßen Windkraftanlage annähernd unverändert. Es ist das Verdienst der Erfindung, diese komplexen Zusammenhänge erkannt und daraus ein Design für ein schallreduziertes Rotorblatt entwickelt zu haben.

Gemäß der Erfindung wird vorgeschlagen, dass sich die oben genannten Modifikationen am Rotorblatt maximal über die äußeren 20 % der Blattlänge erstrecken, das heißt die Ebene E₀ liegt etwa bei einer relativen Länge x/L von 0,80 oder mehr. Auf diese Weise wird erreicht, dass die schallreduzierenden Maßnahmen am Ort der maximalen Schallentwicklung ansetzen und damit ein sehr großer schallmindernder Effekt erreicht werden kann. Gleichzeitig wird damit sichergestellt, dass die Leistungsfähigkeit des Rotorblatts insgesamt ohne nennenswerte Einbußen bleibt, das heißt die Energieausbeute einer mit einem erfindungsgemäßen Rotorblatt ausgerüsteten Windkraftanlage wird praktisch nicht beeinträchtigt. Unter diesem Aspekt ist eine Lage der Ebene E₀ bei einer relativen Länge x/L von etwa 0,9 besonders bevorzugt.

Während bei einem konventionellen Rotorblattdesign das Blattende einen in etwa teilelliptischen Grundriss aufweist und sich daher die Blatttiefe t stetig verringert bis der Wert Null erreicht ist, sieht ein erfindungsgemäßes Rotorblatt vor, dass die Blatttiefe t in der Querschnittsebene E_{E} mindestens 60 % der Blatttiefe t in der Querschnittsebene E₀ beträgt, vorzugsweise zwischen 70 % und 80 %. Es ist sogar denkbar, die Blatttiefe t in Richtung zur Querschnittsebene E_{E} ansteigen zu lassen, beispielsweise bis zu einem maximalen Wert von 120 %. Jeder dieser Verläufe der Blatttiefe t bedingt einen charakteristischen Verlauf des Auftriebsbeiwerts cₐ, dessen Einzelwerte umso niedriger sind, je größer die zugeordnete Blatttiefe t ist, um auf diese Weise die induzierte Verlustleistung minimal bleiben zu lassen.

Ein weiterer Vorteil größerer Blatttiefen t im äußeren Längsabschnitt L_{ä} besteht darin, dass sich größere Profile aus fertigungstechnischen Gründen exakter herstellen lassen, was zu einer weitaus besseren geometrischen Profiltreue beiträgt. Eine bessere Profiltreue schlägt sich einerseits in einer verbesserten Leistungsausbeute nieder, so dass die zuvor genannten minimalen Leistungsverluste mehr als wettgemacht werden. Andererseits werden laminare Ablöseblasen oder Wirbelablösungen weitgehend vermieden, die die Ursache unerwartet hoher Schallemissionen sind.

Die Reduzierung des Auftriebsbeiwerts cₐ kann durch verschiedene Maßnahmen erreicht werden, die bereits allein oder in Kombination miteinander zu dem erfindungsgemäßen Effekt der Schallverminderung führen. Gemäß der Erfindung ist vorgesehen, durch eine in Abhängigkeit von der relativen Länge x/L spezifische Blattverwindung Θ im äußeren Längsabschnitt Einfluss auf den Auftriebsbeiwerts cₐ zu nehmen. Dazu steigt die Blattverwindung Θ im äußeren Längsabschnitt L_{ä} im Bereich vor der Querschnittsebene E_{E} stetig an und übersteigt dabei den Wert der Blattverwindung Θ in der Querschnittsebene E₀. Dem endseitigen Anstieg der Blattverwindung Θ kann dabei ein Minimum im Bereich zwischen den Ebenen E₀ und E_{E} vorausgehen.

Durch die Reduktion der relativen Dicke d/t und/oder die Reduzierung der relativen Wölbung f/t zum Blattende hin können die schallmindernden Auswirkungen der beschriebenen Blattverwindung Θ unterstützt und so eine zusätzliche Schallverminderung erzielt werden. Da die relative Dicke d/t unmittelbaren Einfluss auf die Schallleistung eines Rotors hat, ist in vorteilhafter Weiterbildung der Erfindung vorgesehen, das Rotorblatt im äußeren Längsabschnitt L_{ä} kontinuierlich auf etwa 10 % relative Dicke in der Querschnittsebene E_{E} auszuschäften. Durch die stetige Reduzierung der relativen Wölbung f/t im Längsabschnitt L_{ä} bis auf den Wert Null in der Querschnittsebene E_{E} wird die Summe der beiden Grenzschichtdicken von Profilsaugseite und Profildruckseite minimiert, mit dem vorteilhaften Effekt, dass die Breite des Profilnachlaufs abnimmt und damit auch die grenzschichtbedingten Schallemissionen.

Eine weitere Maßnahme zur Schallreduktion, die nicht nur den Bereich des äußeren Längsabschnitts L_{ä} betrifft, sondern sich auch über die äußere Hälfte des inneren Längsabschnitts Lᵢ erstrecken kann, besteht darin, die Höhe der naturgemäß vorhandenen Hinterkante des aerodynamischen Profils nicht größer als 2 ‰ der Tiefe t im jeweiligen Profilschnitt auszubilden. Hintergrund ist, wie bereits oben beschrieben, dass eine endliche Hinterkante ab einer bestimmten Höhe den Profilnachlauf erheblich verbreitert und damit die Schallemissionen erhöht. In diesem Zusammenhang erweist sich eine im äußeren Längsabschnitt L_{ä} erfindungsgemäß größere Blatttiefe t als besonders vorteilhaft, da kleine Tiefen t zur Erfüllung des oben genannten Kriteriums sehr schnell zu Profilquerschnitten mit derart geringen Hinterkantenhöhen führen würden, dass diese nicht mehr mit einem wirtschaftlich vertretbaren Aufwand herstellbar wären. Mit einer verhältnismäßig großen Blatttiefe t ist die Umsetzung einer Hinterkantenhöhe kleiner als 2 ‰ der Tiefe t wesentlich vereinfacht.

Um zusätzliche Schallquellen in Form von Strömungsablösungen, von laminaren Ablöseblasen, Wirbelablösungen und dergleichen am äußeren Ende des Rotorblatts in der Querschnittsebene E_{E} zu verhindern, wird nach einer weiteren Ausführungsform der Erfindung vorgeschlagen, an die Querschnittsebene E_{E} eine Randkappe anzuschließen. Diese Randkappe, die in ihrer rotationssymmetrischen Ausbildung eine Wölbung von Null in der Querschnittsebene E_{E} voraussetzt, wird durch Umschlagen des Blattprofils um die Profilsehne um 180 ° gebildet. Es handelt sich bei der Randkappe folglich um die Längshälfte eines Rotationskörpers mit der Kontur des Blattprofils. Eine solche Randkappe wird selbst bei größeren Fertigungstoleranzen oder stark wechselnden Anströmgeschwindigkeiten ohne Strömungsablösungen umströmt und beugt daher zusätzlichen Schallemissionen vor.

Eine weitere Schallreduzierung lässt sich gemäß der Erfindung erzielen, indem im äußeren Längsabschnitt L_{ä} alternativ oder kumulativ zur üblichen Vorbiegung nach Luv (Schlagpfeilung) eine Zusatzvorbiegung nach Luv (zusätzliche Schlagpfeilung) vorgesehen wird. Das führt auch unter Windlast zu einem nichtlinearen Verlauf der Blatthinterkante im genannten Bereich, was in schalltechnischer Hinsicht zu einer Verzerrung der Schallabstrahlcharakteristik führt und so die Auswirkungen am Schallimmissionsort abmildert.

Einen ähnlichen Effekt erlangt man durch Vorsehen einer Schwenkpfeilung, insbesondere Schwenkvorpfeilung, am äußeren Blattende, da auch in diesem Fall die Abstrahlcharakteristik durch einen nichtlinearen Verlauf der Blatthinterkante modifiziert wird. Bei einer Schwenkvorpfeilung erweist sich zudem die Tatsache als vorteilhaft, dass die lokale Anströmung in eine Komponente senkrecht und eine Komponente parallel zur Blattvorderkante aufgespalten wird. Die bei der Schwenkvorpfeilung nach Innen weisende vorderkantenparallele Komponente ist ursächlich für eine Reduzierung der Grenzschichtdicken am äußeren Blattende und trägt so in vorteilhafter Weise zur Verminderung der Schallemissionen bei.

Die Erfindung wird nachstehend anhand eines in den Zeichnungen dargestellten Ausführungsbeispiels näher erläutert, ohne damit die Erfindung auf dieses Beispiel zu beschränken. Die oben beschriebenen Maßnahmen zur Schallreduzierung können auch in anderen Kombinationen als hier ausdrücklich beschrieben zur Anwendung kommen, ohne den Rahmen der Erfindung zu verlassen.

Es zeigt
- Fig. 1: eine Ansicht auf die Luvseite einer erfindungsgemäßen Windkraftanlage,
- Fig. 2: eine Draufsicht auf die Saugseite eines erfindungsgemäßen Rotorblatts der in Fig. 1 dargestellten Windkraftanlage,
- Fig. 3: einen Querschnitt durch das in Fig. 2 dargestellte Rotorblatt in der Ebene E₀,
- Fig. 4: einen Querschnitt durch das in Fig. 2 dargestellte Rotorblatt in der Ebene E_{E},
- Fig. 5: eine Darstellung der geometrischen und kinematischen Verhältnisse an einem Blattquerschnitt,
- Fig. 6: a bis e den Verlauf der Blatttiefe t, der Verwindung Θ, der relativen Blattwölbung f/t, der relativen Blattdicke d/t und des Auftriebsbeiwerts cₐ, über den Längsabschnitt L_{ä} des in Fig. 2 dargestellten Rotorblatts,
- Fig. 7: eine Vielzahl von Einzelblattquerschnitten im äußeren Längsabschnitt L_{ä} des in Figur 2 dargestellten Rotorblatts mit auf die Rotationsachse bezogener radialer Blickrichtung,
- Fig. 8: eine Ansicht auf den Endbereich eines erfindungsgemäßen Rotorblatts mit zusätzlicher Schlagpfeilung,
- Fig. 9: eine Draufsicht auf den Endbereich eines erfindungsgemäßen Rotorblatts mit Schwenkvorpfeilung, und die
- Fig. 10: a und b eine Draufsicht und einen Längsschnitt auf den Endbereich eines erfindungsgemäßen Rotorblatts mit Randkappe.

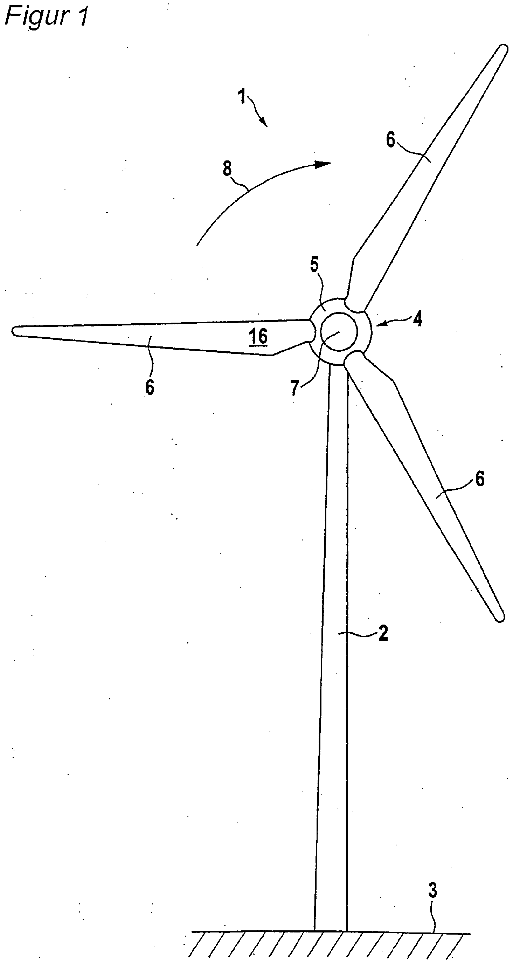

Fig. 1 zeigt eine erfindungsgemäße Windkraftanlage 1, die sich zusammensetzt aus einem Turm 2, der mit seinem Fußbereich fest im Untergrund 3 verankert ist, und einem im Kopfbereich des Turms 2 angeordneten Rotor 4, der um eine quer zur Darstellungsebene verlaufende Rotationsachse 7 in Richtung des Pfeils 8 rotiert. Der Rotor 4 besitzt eine Nabe 5, die am Kopf des Turms 2 drehbar gelagert und mit einem Generator zur Stromerzeugung gekoppelt ist. Im Bereich der Nabe 5 sind die Rotorblätter 6 an den Rotor 4 angeschlossen.

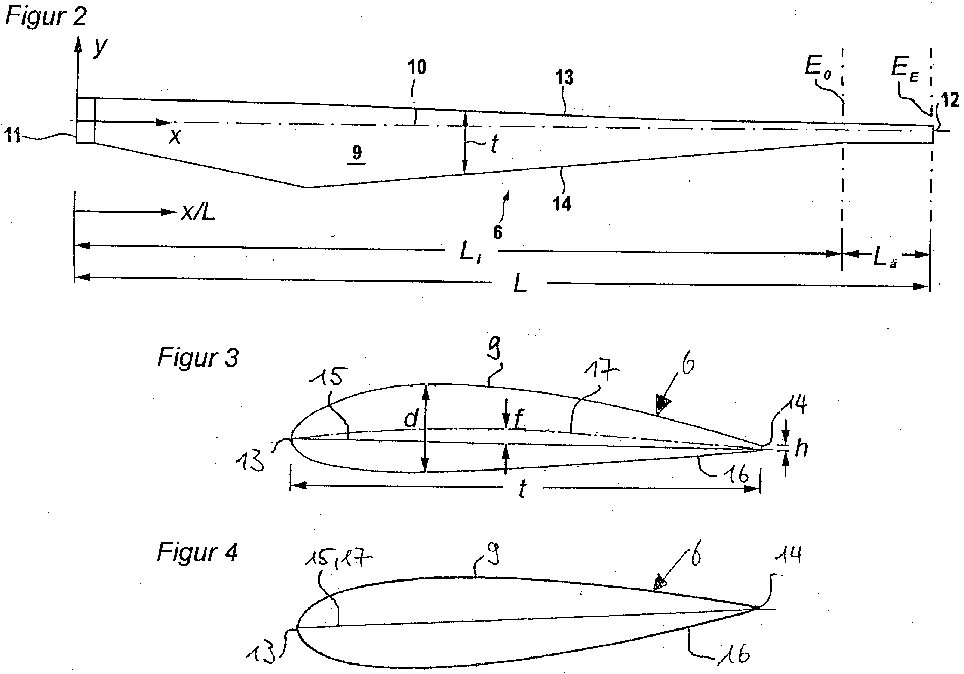

In Fig. 2 ist ein Rotorblatt 6 des Rotors 4 in größerem Maßstab in einer Draufsicht auf die Saugseite 9 dargestellt. Die Längserstreckung des Rotorblatts 6 entlang seiner Längsachse 10 ist als Länge L bezeichnet und ist definiert durch den Abstand des Blattanschlusses 11 vom Blattende 12. Die relative Länge x/L bezeichnet ausgehend vom Blattanschluss 11 einen beliebigen Ort zwischen dem Blattanschluss 11 und dem Blattende 12.

Ferner zeigt Fig. 2 eine Längsgliederung des Rotorblatts 6 mit einem inneren vom Blattanschluss 11 ausgehenden Längsabschnitt Lᵢ und einen sich in Richtung des Blattendes 12 anschließenden äußeren Längsabschnitt L_{ä}. Der Übergang vom inneren Längsabschnitt Lᵢ zum äußeren Längsabschnitt L_{ä} definiert die auf die Längsachse 10 senkrecht stehende Ebene E₀, das Blattende 12 die Ebene E_{E}. Der Ort der Ebene E₀ liegt im vorliegenden Beispiel bei einer relativen Länge x/L von 0,9, kann jedoch auch alle Zwischenwerte zwischen 0,80 und 0,98 einnehmen.

Die erfindungsgemäß vorgeschlagenen Maßnahmen zur Reduzierung der Schallemissionen betreffen hauptsächlich den äußeren Längsabschnitt L_{ä} des Rotorblatts 6, also den Bereich zwischen den Ebenen E₀ und E_{E}.

Fig. 3 entspricht einem Querschnitt durch das Rotorblatt 6 in der Ebene E₀, zeigt also das in der Ebene E₀ vorhandene aerodynamische Profil. Dieses besitzt eine Vorderkante 13 und Hinterkante 14, deren gegenseitiger Abstand senkrecht zur Längsachse 10 die Tiefe t bestimmt. Während die Vorderkante 13 vom Scheitel der dort stetig gekrümmten Profilkurve gebildet ist, endet die Hinterkante 14 aus fertigungstechnischen Gründen mit einem Absatz der Höhe h. Die Gerade durch die Vorderkante 13 und Hinterkante 14 wird als Profilsehne 15 bezeichnet. Die Mittelpunkte zwischen der Saugseite 9 und der Druckseite 16 ergeben die Skelettlinie 17.

Das aerodynamische Profil in der Querschnittsebene E₀ ist ferner gekennzeichnet durch eine stetig gekrümmte Saugseite 9 und ebenfalls stetig gekrümmte Druckseite 16, deren größter gegenseitiger Abstand die Dicke d des Profils definiert. Die relative Dicke d/t entspricht dem Verhältnis der Dicke d zur Tiefe t in der jeweiligen Querschnittsebene. Die Wölbung f ist definiert durch den maximalen Abstand der Skelettlinie 17 von der Profilsehne 15. Die relative Wölbung f/t wird durch das Verhältnis der Wölbung f zur Tiefe t in der entsprechenden Querschnittsebene angegeben.

Fig. 4 zeigt das aerodynamische Profil des Rotorblatts 6 in der Querschnittsebene E_{E}. Gegenüber dem in Fig. 3 dargestellten Profil besitzt das in Fig. 4 gezeigte eine etwa um 15 % verringerte Tiefe t, eine um etwa 4 ° größere Verwindung Θ, eine auf den Wert Null reduzierte relative Wölbung f/t und eine auf einen Wert von etwa 10 % ausgeschäftete relative Dicke d/t. Diese Maßnahmen tragen dazu bei, dass die aerodynamischen Profile zwischen den Ebenen E₀ und E_{E} einen insgesamt verringerten cₐ-Wert besitzen.

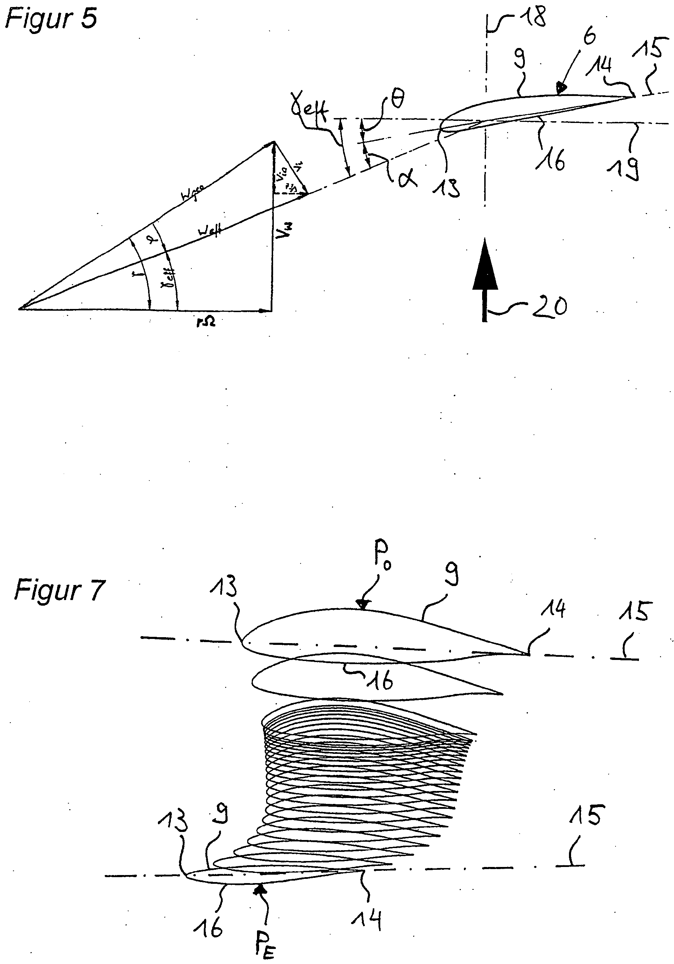

Fig. 5 verdeutlicht die geometrischen und kinematischen Verhältnisse an einem Rotorblatt 6 einer in Betrieb befindlichen Windkraftanlage. Das Rotorblatt 6 beschreibt durch Rotation um die Rotationsachse 18 eine Rotorebene 19. Die Druckseite 16 des Rotorblatts 6 ist dem Wind 20 zugewandt. Zur Erzeugung eines Vortriebs ist das Blatt 6 mit seiner Vorderkante 13 nach Luv geneigt, während die Hinterkante 14 nach Lee zeigt. Das Maß der Neigung entspricht dem Winkel zwischen der Rotorebene 19 und der Profilsehne 15 des Rotorblatts 6. Dieser Winkel beschreibt die Verwindung Θ, die sich zusammensetzt aus einer örtlichen, vom radialen Abstand zur Rotorachse 18 charakteristischen Blattverwindung, und einem über die gesamte Blattlänge einheitlichen Blatteinstellwinkel, der bei Pitch geregelten Windkraftanlagen variabel und bei einer Stall geregelten Windkraftanlagen fest vorgegeben ist.

Ferner zeigt Fig. 5 ein Winddreieck mit einer in etwa senkrecht zur Rotorebene 19 orientierten Windkomponente v_{w}. Die hierzu senkrecht, also parallel zur Rotorebene 19, verlaufende Komponente entspricht der durch die Umlaufgeschwindigkeit Ω x r entstehenden Luftströmung, die in Richtung des Blattendes aufgrund des größer werdenden Radius linear zunimmt. Beide Komponenten ergeben zusammen nach Betrag und Richtung die geometrische Anströmung w_{geo}. Zur Berücksichtigung der Störung der Zuströmung durch den Rotor selbst ist eine den Abwind berücksichtigende Korrektur der geometrischen Anströmung w_{geo} um den Abwindwinkel ϕ notwendig, woraus sich die effektive Anströmung w_{eff} ergibt. Der Winkel zwischen der effektiven Anströmung w_{eff} und der Profilsehne 15 des Rotorblatts 6 entspricht dem effektiven Anstellwinkel α. Die Verwindung Θ und der Anstellwinkel α bilden zusammen den effektiven Steigungswinkel y_{eff}.

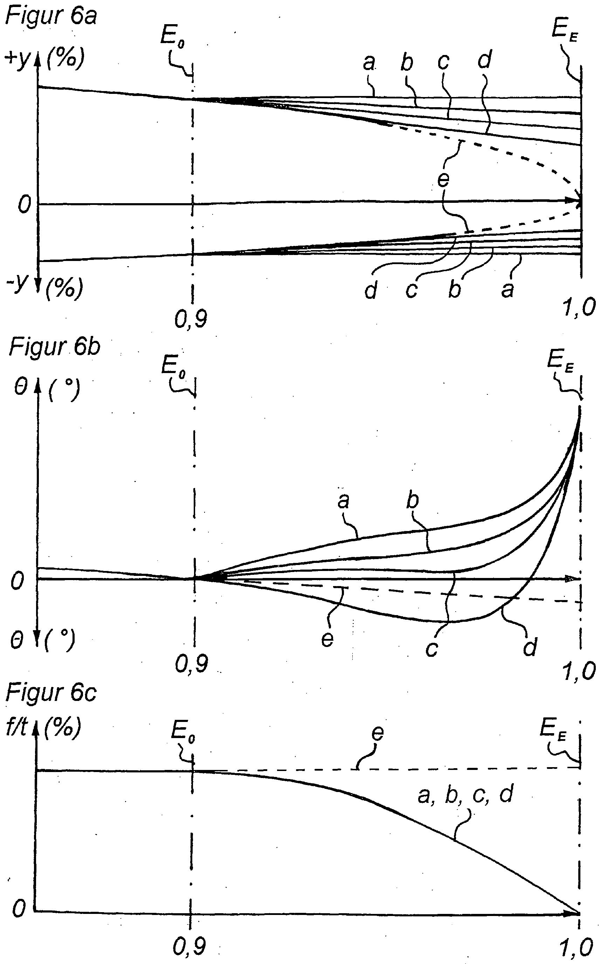

Der Verlauf der oben genannten Profilparameter von der Ebene E₀ zur Ebene E_{E} ist in den Fig. 6a bis e wiedergegeben. Bei den dort dargestellten Diagrammen bezeichnet die Ordinate die relative Länge x/L des Rotorblatts 6 im Bereich des äußeren Längsabschnitts L_{ä} und des sich daran unmittelbar anschließenden Abschnitts des Längsabschnitts Lᵢ.

In Fig. 6a sind an der Abszisse die Y-Koordinaten der Vorderkante 13 und Hinterkante 14 angetragen, aus deren Differenz sich der Verlauf der Tiefe t ergibt. Fig. 6a zeigt dabei mit den Blatttiefenverläufen a bis d unterschiedliche Ausführungsformen der Erfindung, der Blattverlauf e entspricht dem eines konventionellen Rotorblatts. Charakteristisch für den Verlauf a ist, dass die Blatttiefe t im äußeren Längsabschnitt L_{ä} konstant der Blatttiefe t in der Querschnittsebene E₀ entspricht. Hingegen zeichnen sich die Verläufe b, c und d durch einen linearen, leicht konvergierenden Verlauf der Vorderkante 13 und Hinterkante 14 zwischen den Ebenen E₀ und E_{E} aus, d. h. die Tiefe t nimmt zur Querschnittsebene E_{E} ab, vorzugsweise linear. Der Übergang vom inneren Längsabschnitt Lᵢ zum äußeren Längsabschnitt L_{ä} erfolgt dabei stetig. Ausgehend von 100 % Blatttiefe t in der Querschnittsebene E₀ verringert sich die Blatttiefe t beim Verlauf b auf eine Blatttiefe t von etwa 85 % in der Ebene E_{E}, beim Verlauf c auf 72 % und beim Verlauf d auf 60 %. Beliebige Zwischenwerte liegen im Rahmen der Erfindung.

Aus Fig. 6b erkennt man jeweils den Verlauf der Verwindung Θ im Längsabschnitt L_{ä} in Abhängigkeit der oben beschriebenen Blatttiefenverläufe a bis d, wobei einander zugeordnete Verläufe gleiche Bezugszeichen a bis d tragen. Der Verwindungsverlauf a steigt ab der Querschnittsebene E₀ stetig an, zunächst annähernd linear oder leicht degressiv bis zu einer relativen Länge von etwa 0,97, dann mit progressiver Steigung zur Querschnittsebene E_{E} hin. Einen ähnlichen aber weniger stark ausgeprägten Verlauf zeigt die Kurve b. Davon unterscheiden sich die Verwindungsverläufe c und d, indem diese zwischen der Querschnittsebene E₀ und E_{E} in Richtung zur Blattspitze eine moderate negative Steigung aufweisen, die nach Erreichen eines Minimums in der äußeren Hälfte des äußeren Längsabschnitts L_{ä} in eine progressiv zunehmende positive Steigung übergeht. Allen Verläufen ist ein starker Anstieg der Verwindung Θ im äußeren Drittel des äußeren Längsabschnitts L_{ä} gemein, vorzugsweise auf einen Wert der etwa 4° über der Verwindung in der Querschnittsebene E₀ liegt. Der Übergang der Verwindung Θ vom inneren Längsabschnitt Lᵢ zum äußeren Längsabschnitt L_{ä} verläuft vorzugsweise ebenfalls stetig.

Die in Fig. 6c dargestellte Kurve spiegelt den erfindungsgemäßen Verlauf der relativen Wölbung f/t zwischen den Querschnittsebenen E₀ und E_{E} wider. Der Verlauf schließt stetig an den des Längsabschnitts Lᵢ an und nimmt in Richtung der Querschnittsebene E_{E} progressiv ab, bis am Blattende 12 der Wert 0 % erreicht ist.

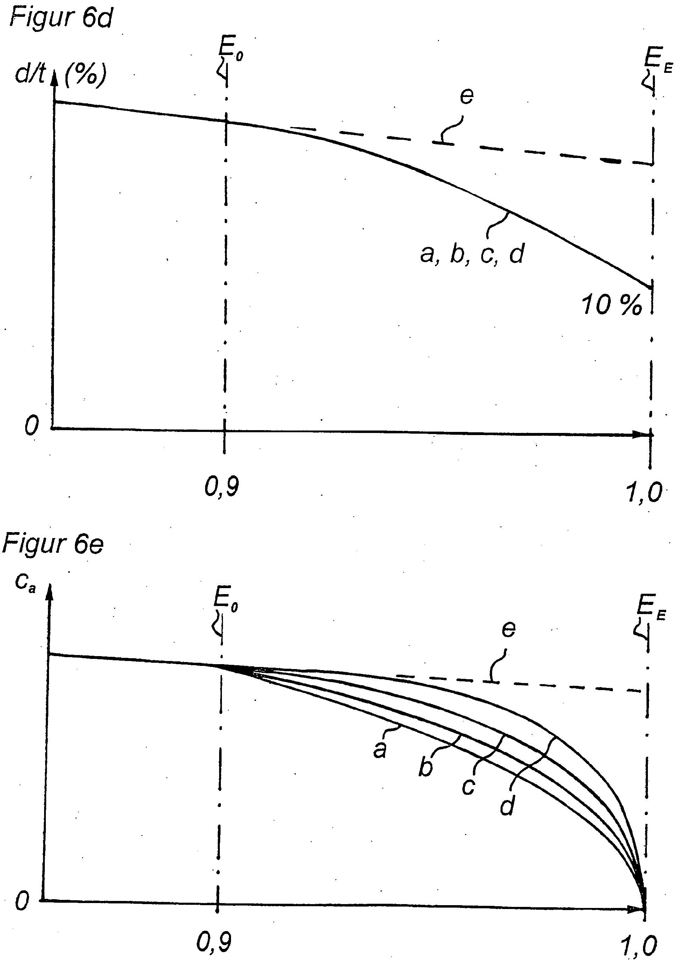

Einen ähnlichen in Fig. 6d dargestellten Verlauf über den Längsabschnitt L_{ä} zeigt die relative Dicke d/t, die in der Ebene E₀ ebenfalls stetig den Verlauf des inneren Längsabschnitts Lᵢ fortsetzt und in Richtung der Querschnittsebene E_{E} progressiv oder linear auf einen Wert von etwa 10 % abnimmt.

Fig. 6e zeigt den Verlauf des Auftriebsbeiwerts cₐ, der das Ergebnis der unter den Figuren 6a bis 6d beschriebenen Maßnahmen ist. Die Kurven a bis d korrespondieren wiederum mit den Verläufen a bis d der Blatttiefe t und der Verwindung Θ. Die Kurven gehen stetig aus dem Verlauf im Längsabschnitts Lᵢ hervor und fallen in Richtung der Querschnittsebene E_{E} überproportional, also progressiv, um am Blattende 12 den Wert Null anzunehmen. Die unterschiedlichen Verläufe zeigen dabei, dass je größer die Tiefe t des Rotorblatts 6 und die damit korrelierende größere Verwindung Θ, eine umso stärkere Verringerung des cₐ-Werts erreichbar ist, was letzten Endes zu der erwünschten Schallreduzierung führt.

Der in Fig. 6b aufgetragene Verlauf der Verwindung Θ ist in Fig. 7 bildlich veranschaulicht. Fig. 7 zeigt eine Vielzahl von Profilquerschnitten im Bereich des äußeren Längsabschnitts L_{ä} bei radial zur Rotationsachse 18 weisender Blickrichtung, wobei das in der Querschnittsebene E₀ liegende Profil mit P₀ bezeichnet ist, und das in der Querschnittsebene E_{E} mit P_{E}. Für diese beiden Profilquerschnitte ist jeweils die dazugehörige Profilsehne 15 dargestellt. Deren konvergierender Verlauf zeigt, dass die Verwindung Θ des Querschnittsprofils P_{E} in der Querschnittsebene E_{E} größer ist als die Verwindung Θ des Profilquerschnitts P₀ in der Querschnittsebene E₀ und zwar um etwa 4° im vorliegenden Fall. Ferner sieht man die Abnahme der relativen Wölbung f/t vom Profil P₀ mit einer vorbestimmten Wölbung zum vollsymmetrischen Profil P_{E} mit der Wölbung Null in der Querschnittsebene E_{E}. Das gegenüber dem Profil P_{E} relativ schlanke Profil P₀ am Blattende ist das Ergebnis einer Dickenausschäftung auf etwa 10 %. Die zusätzliche Schlagpfeilung Δ z nach Luv wird dadurch deutlich, dass die Profilschnitte in Richtung zur Querschnittsebene E_{E} zur Druckseite 16 hin versetzt sind. In entsprechender Weise ist die Schwenkvorpfeilung sichtbar gemacht, die sich aus dem Versatz der letzten 6 Profilquerschnitte vor der Querschnittseben E_{E} in Richtung deren Vorderkante 13 ergibt.

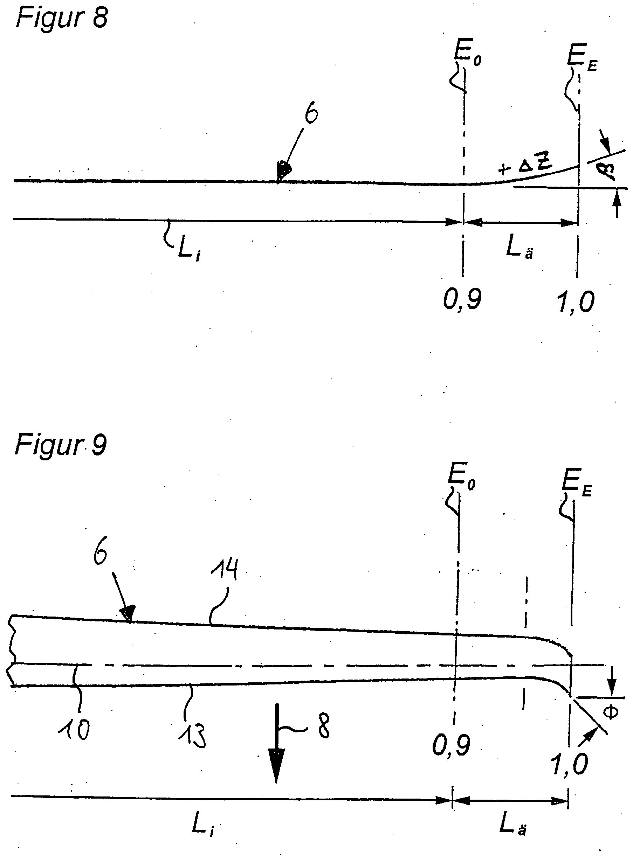

Fig. 8 betrifft eine Ausführungsform der Erfindung, bei der das Rotorblatt 6 eine konventionelle Schlagpfeilung nach Luv aufweist, die in dem äußeren Längsabschnitt L_{ä} von einer zusätzlichen Schlagpfeilung Δ z nach Luv überlagert ist. An der Blattspitze ergibt sich auf diese Weise ein Schlagpfeilungswinkel β, der gemäß der Erfindung einen Wert bis zu 30° annehmen kann, vorzugsweise 20°.

Wie Fig. 9 zeigt, kann der Blattendbereich alternativ oder kumulativ zur zusätzlichen Schlagpfeilung mit einer Schwenkpfeilung in Rotationsrichtung 8 (Schwenkvorpfeilung) versehen sein. Zu diesem Zweck ist der äußerste Längsabschnitt L_{ä} des Rotorblatts 6 in Rotationsrichtung nach vorne gebogen, wobei sich ein Schwenkvorpfeilungswinkel Φ zwischen der Blattspitze und der Längsachse 10 bzw. Pitchachse des Rotorblatts 6 einstellt, der gemäß der Erfindung ≤ 60° ist, vorzugsweise zwischen 30° und 60° liegt, höchst vorzugsweise 45° beträgt. Die Schwenkvorpfeilung des Rotorblatts 6 kann bereits in der Ebene E₀ beginnen oder wie in Figur 9 dargestellt erst später. Sowohl die zusätzliche Schlagpfeilung als auch die Schwenkvorpfeilung im Längsabschnitt L_{ä} gehen zudem sehr deutlich aus Figur 7 hervor.

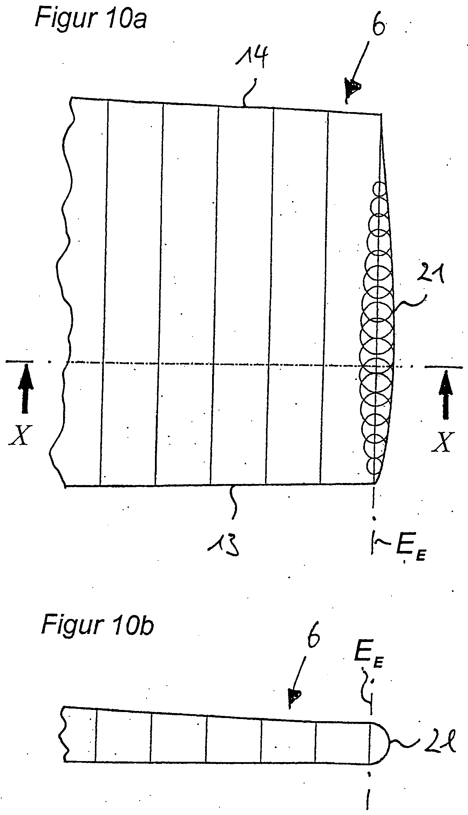

Bei der in den Figuren 10a und b dargestellten Ausführungsform eines erfindungsgemäßen Rotorblatts 6 schließt an die Querschnittsebene E_{E} eine Randkappe 21 an. Die Randkappe 21 geht im Bereich der Querschnittsebene E_{E} aus einem vollsymmetrischen Querschnittsprofil hervor, d.h. die relative Wölbung f/t des Profils beträgt Null. So kann die Randkappe 21 in einfacher Weise durch Umschlagen der das Profil bildenden Umrisslinie der Saugseite 9 oder Druckseite 16 um 180° gebildet werden. Die Randkappe 21 stellt also einen halben Rotationskörper dar.

## Patentansprüche

1. Rotorblatt für eine Windkraftanlage (1) mit einer sich vom Blattanschluss (11) bis Blattende (12) erstreckenden absoluten Länge L und einer vom Blattanschluss (11) ausgehenden relativen Blattlänge x/L, wobei das Rotorblatt (6) unterteilt ist in einen dem Blattanschluss (11) zugeordneten inneren Längsabschnitt Lᵢ und einen dem Blattende (12) zugeordneten äußeren Längsabschnitt L_{ä} und der Übergang vom inneren Längsabschnitt Lᵢ zum äußeren Längsabschnitt L_{ä} die Querschnittsebene E₀ und das Blattende (12) die Querschnittsebene E_{E} definiert und wobei das Rotorblatt (6) in Abhängigkeit der relativen Blattlänge x/L jeweils ein spezifisches aerodynamisches Profil aufweist mit einer Tiefe t, einer Verwindung Θ, einer relativen Dicke d/t, einer relativen Wölbung f/t und einer relativen Hinterkantendicke h/t, **dadurch gekennzeichnet, dass** die Querschnittsebene E₀ bei einer relativen Blattlänge x/L im Bereich zwischen 0,80 und 0,96 liegt, die Blatttiefe t des aerodynamischen Profils in der Querschnittsebene E_{E} mindestens 60 % der Blatttiefe t des aerodynamischen Profils in der Querschnittsebene E₀ beträgt und die Blattverwindung Θ des aerodynamischen Profils in der Querschnittsebene E_{E} größer ist als die Blattverwindung Θ des aerodynamischen Profils in der Querschnittsebene E₀, wobei die Blattverwindung Θ des aerodynamischen Profils in der Querschnittsebene E_{E} um 3° bis 5° größer ist als die Blattverwindung Θ des aerodynamischen Profils in der Querschnittsebene E₀.

2. Rotorblatt nach Anspruch 1, **dadurch gekennzeichnet, dass** die Querschnittsebene E₀ bei einer relativen Blattlänge x/L im Bereich zwischen 0,88 und 0,92, vorzugsweise bei 0,9 liegt.

3. Rotorblatt nach einem der Ansprüche 1 oder2, **dadurch gekennzeichnet, dass** die Blatttiefe t in der Querschnittsebene E_{E} kleiner oder gleich der 1,2-fachen Blatttiefe t in der Querschnittsebene E₀ ist, vorzugsweise kleiner oder gleich der Blatttiefe t in der Querschnittsebene E₀, höchst vorzugsweise zwischen dem 0,7-fachen und 0,8-fachen der Blatttiefe t in der Querschnittsebene E₀.

4. Rotorblatt nach einem der Ansprüche 1 bis 3, **dadurch gekennzeichnet, dass** der Verlauf der Blatttiefe t von der Querschnittsebene E₀ zur Querschnittsebene E_{E} stetig ist.

5. Rotorblatt nach einem der Ansprüche 1 bis 4, **dadurch gekennzeichnet, dass** der Verlauf der Blattverwindung Θ ausgehend von der Querschnittsebene E₀ in Richtung der Querschnittsebene E_{E} stetig zunimmt.

6. Rotorblatt nach einem der Ansprüche 1 bis 4, **dadurch gekennzeichnet, dass** der Verlauf der Blattverwindung Θ ausgehend von der Querschnittsebene E₀ in Richtung der Querschnittsebene E_{E} zunächst ein Minimum annimmt und ab dem Minimum in Richtung der Querschnittsebene E₀ stetig zunimmt.

7. Rotorblatt nach Anspruch 5 oder 6, **dadurch gekennzeichnet, dass** der Verlauf der Blattverwindung Θ im stetig verlaufenden Bereich zur Querschnittsebene E_{E} hin progressiv zunimmt.

8. Rotorblatt nach einem der Ansprüche 1 bis 7, **dadurch gekennzeichnet, dass** die relative Wölbung f/t des aerodynamischen Profils in der Querschnittsebene E_{E} geringer ist als die relative Wölbung f/t des aerodynamischen Profils in der Querschnittsebene E₀, vorzugsweise in der Querschnittsebene E_{E} Null beträgt.

9. Rotorblatt nach Anspruch 8, **dadurch gekennzeichnet, dass** der Verlauf der relativen Wölbung f/t von der Querschnittsebene E₀ zur Querschnittsebene E_{E} stetig ist, vorzugsweise progressiv abnehmend.

10. Rotorblatt nach einem der Ansprüche 1 bis 9, **dadurch gekennzeichnet, dass** die relative Dicke d/t des aerodynamischen Profils in der Querschnittsebene E_{E} geringer ist als die relative Dicke d/t des aerodynamischen Profils in der Querschnittsebene E₀.

11. Rotorblatt nach Anspruch 10, **dadurch gekennzeichnet, dass** der Verlauf der relativen Dicke d/t von der Querschnittsebene E₀ zur Querschnittsebene E_{E} stetig ist, vorzugsweise progressiv abnehmend.

12. Rotorblatt nach Anspruch 10 oder 11, **dadurch gekennzeichnet, dass** die relative Dicke d/t des aerodynamischen Profils in der Querschnittsebene E_{E} 9 % bis 12 % beträgt.

13. Rotorblatt nach einem der Ansprüche 1 bis 12, **dadurch gekennzeichnet, dass** der Verlauf der Tiefe t und/oder der Verlauf der Verwindung Θ und/oder der Verlauf der relativen Wölbung f/t und/oder der Verlauf der relativen Dicke d/t in der Querschnittsebene E₀ stetig an den des Längsabschnitts Lᵢ des Rotorblatts (6) anschließt.

14. Rotorblatt nach einem der Ansprüche 1 bis 13, **dadurch gekennzeichnet, dass** im Anschluss an die Querschnittsebene E_{E} eine Randkappe (21) angeordnet ist.

15. Rotorblatt nach Anspruch 14, **dadurch gekennzeichnet, dass** das Rotorblatt (6) in der Querschnittsebene E_{E} keine Wölbung aufweist und die Form der Randkappe (21) durch Rotation der Kontur der Druckseite oder Saugseite um die Profilsehne gebildet ist.

16. Rotorblatt nach einem der Ansprüche 1 bis 15, **dadurch gekennzeichnet, dass** die relative Höhe h/t der Hinterkante (14) des Rotorblatts (6) zumindest im Bereich E₀ bis E_{E} kleiner oder gleich 2 ‰ beträgt, vorzugsweise ab einer relativen Länge x/L, die größer ist als 0,5.

17. Rotorblatt nach einem der Ansprüche 1 bis 16, **gekennzeichnet durch** eine zusätzliche Schlagpfeilung Δz nach Luv im äußeren Längsabschnitt L_{ä} des Rotorblatts (6).

18. Rotorblatt nach Anspruch 17, **dadurch gekennzeichnet, dass** die zusätzliche Schlagpfeilung Δz von E₀ nach E_{E} stetig und progressiv verläuft, sowie stetig an den inneren Längsabschnitt Lᵢ des Rotorblatts (6) anschließt, wobei der Schlagpfeilungswinkel β in der Querschnittsebene E_{E} 10° bis 30° beträgt, vorzugsweise 20°.

19. Rotorblatt nach einem der Ansprüche 1 bis 18, **gekennzeichnet durch** eine Schwenkvorpfeilung im äußeren Längsabschnitt L_{ä} des Rotorblatts (6) in Rotationsrichtung (8).

20. Rotorblatt nach Anspruch 19, **dadurch gekennzeichnet, dass** die Schwenkvorpfeilung von E₀ nach E_{E} stetig und progressiv verläuft, sowie stetig an den inneren Längsabschnitt Lᵢ des Rotorblatts (6) anschließt, wobei der Schwenkvorpfeilungswinkel Φ in der Querschnittsebene E_{E} kleiner 60° ist, vorzugsweise 45° beträgt.

21. Windkraftanlage, **gekennzeichnet durch** ein Rotorblatt (6) gemäß einem der Patentansprüche 1 bis 20.

## Claims

1. Rotor blade for a wind turbine (1) having an absolute length L extending from the blade connection (11) as far as the blade tip (12) and a relative blade length x/L starting from the blade connection (11), the rotor blade (6) being divided into an inner longitudinal portion Lᵢ assigned to the blade connection (11) and an outer longitudinal portion L_{ä} assigned to the blade tip (12), and the transition from the inner longitudinal portion Lᵢ to the outer longitudinal portion L_{ä} defining the cross-sectional plane E₀ and the blade tip (12) defining the cross-sectional plane E_{E}, and the rotor blade (6) having a specific aerodynamic profile which is dependent on the relative blade length x/L in each case and has a depth t, a twist Θ, a relative thickness d/t, a relative curvature f/t and a relative trailing edge thickness h/t, **characterised in that**, at a relative blade length x/L, the cross-sectional plane E₀ is in the range between 0.80 and 0.96, the blade depth t of the aerodynamic profile in the cross-sectional plane E_{E} is at least 60 % of the blade depth t of the aerodynamic profile in the cross-sectional plane E₀, and the blade twist Θ of the aerodynamic profile in the cross-sectional plane E_{E} is greater than the blade twist Θ of the aerodynamic profile in the cross sectional plane E₀, the blade twist Θ of the aerodynamic profile in the cross-sectional plane E_{E} being greater than the blade twist Θ of the aerodynamic profile in the cross-sectional plane E₀ by from 3° to 5°.

2. Rotor blade according to claim 1, **characterised in that**, at a relative blade length x/L, the cross-sectional plane E₀ is in the range between 0.88 to 0.92, preferably 0.9.

3. Rotor blade according to either claim 1 or claim 2, **characterised in that** the blade depth t in the cross-sectional plane E_{E} is less than or equal to 1.2 times the blade depth t in the cross-sectional plane E₀, preferably less than or equal to the blade depth t in the cross-sectional plane E₀, and most preferably between 0.7 times and 0.8 times the blade depth t in the cross-sectional plane E₀.

4. Rotor blade according to any of claims 1 to 3, **characterised in that** the course of the blade depth t from the cross-sectional plane E₀ to the cross-sectional plane E_{E} is continuous.

5. Rotor blade according to any of claims 1 to 4, **characterised in that** the course of the blade twist Θ starting from the cross-sectional plane E₀ towards the cross-sectional plane E_{E} increases steadily.

6. Rotor blade according to any of claims 1 to 4, **characterised in that** the course of the blade twist Θ starting from the cross-sectional plane E₀ towards the cross-sectional plane E_{E} first reaches a minimum point and then increases steadily from said minimum point towards the cross-sectional plane E₀.

7. Rotor blade according to either claim 5 or claim 6, **characterised in that** the course of the blade twist Θ increases progressively in the continuously extending region towards the cross-sectional plane E_{E}.

8. Rotor blade according to any of claims 1 to 7, **characterised in that** the relative curvature f/t of the aerodynamic profile in the cross-sectional plane E_{E} is less than the relative curvature f/t of the aerodynamic profile in the cross-sectional plane E₀, said curvature preferably being zero in the cross-sectional plane E_{E}.

9. Rotor blade according to claim 8, **characterised in that** the course of the relative curvature f/t from the cross-sectional plane E₀ to the cross-sectional plane E_{E} is a continuous course, preferably a progressively decreasing course.

10. Rotor blade according to any of claims 1 to 9, **characterised in that** the relative thickness d/t of the aerodynamic profile in the cross-sectional plane E_{E} is less than the relative thickness d/t of the aerodynamic profile in the cross-sectional plane E₀.

11. Rotor blade according to claim 10, **characterised in that** the course of the relative thickness d/t from the cross-sectional plane E₀ to the cross-sectional plane E_{E} is a continuous course, preferably a progressively decreasing course.

12. Rotor blade according to either claim 10 or claim 11, **characterised in that** the relative thickness d/t of the aerodynamic profile in the cross-sectional plane E_{E} is from 9 % to 12 %.

13. Rotor blade according to any of claims 1 to 12, **characterised in that** the course of the depth t and/or the course of the twist Θ and/or the course of the relative curvature f/t and/or the course of the relative thickness d/t in the cross-sectional plane E₀ continuously adjoins the course of the longitudinal portion Lᵢ of the rotor blade (6).

14. Rotor blade according to any of claims 1 to 13, **characterised in that** an edge cap (21) is arranged at the connection to the cross-sectional plane E_{E}.

15. Rotor blade according to claim 14, **characterised in that** the rotor blade (6) does not curve in the cross-sectional plane E_{E} and the shape of the edge cap (21) is formed by rotating the contour of the pressure side or suction side around the profile chord.

16. Rotor blade according to any of claims 1 to 15, **characterised in that** the relative height h/t of the trailing edge (14) of the rotor blade (6) is less than or equal to 2 ‰ at least in the region from E₀ to E_{E}, preferably starting from a relative length x/L of greater than 0.5.

17. Rotor blade according to any of claims 1 to 16, **characterised by** an additional flap sweep Δz on the windward side in the outer longitudinal portion L_{ä} of the rotor blade (6).

18. Rotor blade according to claim 17, **characterised in that** the additional flap sweep Δz extends continuously and progressively from E₀ to E_{E} and continuously adjoins the inner longitudinal portion Lᵢ of the rotor blade (6), the flap sweep angle ß being from 10° to 30°, preferably 20°, in the cross-sectional plane E_{E}.

19. Rotor blade according to any of claims 1 to 18, **characterised by** negative rotational sweep in the outer longitudinal portion L_{ä} of the rotor blade (6) in the rotational direction (8).

20. Rotor blade according to claim 19, **characterised in that** the negative rotational sweep extends continuously and progressively from E₀ to E_{E} and continuously adjoins the inner longitudinal portion Lᵢ of the rotor blade (6), the negative rotational sweep angle Φ being smaller than 60°, preferably 45°, in the cross-sectional plane E_{E}.

21. Wind turbine, **characterised by** a rotor blade (6) according to any of claims 1 to 20.

## Revendications

1. Pale de rotor pour une éolienne (1) ayant une longueur absolue L s'étendant de l'attache de pale (11) à l'extrémité de pale (12) et une longueur de pale relative x/L en partant de l'attache de pale (11), la pale de rotor (6) étant divisée en un tronçon longitudinal intérieur Lᵢ associé à l'attache de pale (11) et un tronçon longitudinal extérieur L_{ä} associé à l'extrémité de pale (12), la transition entre le tronçon longitudinal intérieur Lᵢ et le tronçon longitudinal extérieur La définissant le plan de section transversale E₀ et l'extrémité de pale (12) le plan de section transversale E_{E}, et la pale de rotor (6) présentant chaque fois un profil aérodynamique spécifique en fonction de la longueur de pale relative x/L avec une profondeur t, un vrillage Θ, une épaisseur relative d/t, une courbure relative f/t et une épaisseur relative au bord de fuite h/t, **caractérisée en ce que** le plan de section transversale E₀ se situe à une longueur de pale relative x/L dans la plage comprise entre 0,80 et 0,96, la profondeur de pale t du profil aérodynamique dans le plan de section transversale E_{E} est au moins égale à 60 % de la profondeur de pale t du profil aérodynamique dans le plan de section transversale E₀ et le vrillage de pale Θ du profil aérodynamique dans le plan de section transversale E_{E} est supérieur au vrillage de pale Θ du profil aérodynamique dans le plan de section transversale E₀, le vrillage de pale Θ du profil aérodynamique dans le plan de section transversale E_{E} étant supérieur de 3° à 5° au vrillage de pale Θ du profil aérodynamique dans le plan de section transversale E₀.

2. Pale de rotor selon la revendication 1, **caractérisée en ce que** le plan de section transversale E₀ se situe à une longueur de pale relative x/L dans la plage comprise entre 0,88 et 0,92, de préférence à 0,9.

3. Pale de rotor selon l'une des revendications 1 ou 2, **caractérisée en ce que** la profondeur de pale t dans le plan de section transversale E_{E} est inférieure ou égale à 1,2 fois la profondeur de pale t dans le plan de section transversale E₀, de préférence inférieure ou égale à la profondeur de pale t dans le plan de section transversale E₀, le plus préférentiellement comprise entre 0,7 fois et 0,8 fois la profondeur de pale t dans le plan de section transversale E₀.

4. Pale de rotor selon l'une des revendications 1 à 3, **caractérisée en ce que** le profil de la profondeur de pale t du plan de section transversale E₀ vers le plan de section transversale E_{E} est continu.

5. Pale de rotor selon l'une des revendications 1 à 4, **caractérisée en ce que** le profil du vrillage de pale 0 en partant du plan de section transversale E₀ en direction du plan de section transversale E_{E} augmente de façon continue.

6. Pale de rotor selon l'une des revendications 1 à 4, **caractérisée en ce que** le profil du vrillage de pale Θ en partant du plan de section transversale E₀ en direction du plan de section transversale E_{E} atteint d'abord un minimum et, à partir du minimum, augmente de façon continue en direction du plan de section transversale E₀.

7. Pale de rotor selon la revendication 5 ou 6, **caractérisée en ce que** le profil du vrillage de pale Θ dans la zone de profil continu augmente progressivement en direction du plan de section transversale E_{E}.

8. Pale de rotor selon l'une des revendications 1 à 7, **caractérisée en ce que** la courbure relative f/t du profil aérodynamique dans le plan de section transversale E_{E} est plus faible que la courbure relative f/t du profil aérodynamique dans le plan de section transversale E₀, de préférence est nulle dans le plan de section transversale E_{E}.

9. Pale de rotor selon la revendication 8, **caractérisée en ce que** le profil de la courbure relative f/t du plan de section transversale E₀ vers le plan de section transversale E_{E} est continu, de préférence diminue progressivement.

10. Pale de rotor selon l'une des revendications 1 à 9, **caractérisée en ce que** l'épaisseur relative d/t du profil aérodynamique dans le plan de section transversale E_{E} est plus faible que l'épaisseur relative d/t du profil aérodynamique dans le plan de section transversale E₀.

11. Pale de rotor selon la revendication 10, **caractérisée en ce que** le profil de l'épaisseur relative d/t du plan de section transversale E₀ vers le plan de section transversale E_{E} est continu, de préférence diminue progressivement.

12. Pale de rotor selon la revendication 10 ou 11, **caractérisée en ce que** l'épaisseur relative d/t du profil aérodynamique dans le plan de section transversale E_{E} est comprise entre 9 % et 12 %.

13. Pale de rotor selon l'une des revendications 1 à 12, **caractérisée en ce que** le profil de la profondeur t et/ou le profil du vrillage Θ et/ou le profil de la courbure relative f/t et/ou le profil de l'épaisseur relative d/t dans le plan de section transversale E₀ se raccordent de façon continue à ceux du tronçon longitudinal Lᵢ de la pale de rotor (6).

14. Pale de rotor selon l'une des revendications 1 à 13, **caractérisée en ce qu'**une coiffe de bord (21) est disposée à la suite du plan de section transversale E_{E}.

15. Pale de rotor selon la revendication 14, **caractérisée en ce que** la pale de rotor (6) ne présente pas de courbure dans le plan de section transversale E_{E} et la forme de la coiffe de bord (21) est obtenue par rotation du contour du côté pression ou du côté aspiration autour de la corde de profil.

16. Pale de rotor selon l'une des revendications 1 à 15, **caractérisée en ce que** la hauteur relative h/t du bord de fuite (14) de la pale de rotor (6) est inférieure ou égale à 2 ‰ au moins dans la zone de E₀ à E_{E}, de préférence à partir d'une longueur relative x/L supérieure à 0,5.

17. Pale de rotor selon l'une des revendications 1 à 16, **caractérisée par** une flèche positive supplémentaire Δz vers le côté au vent dans le tronçon longitudinal extérieur L_{ä} de la pale de rotor (6).

18. Pale de rotor selon la revendication 17, **caractérisée en ce que** la flèche positive supplémentaire Δz s'étend de façon continue et progressive de E₀ vers E_{E} et se raccorde de façon continue au tronçon longitudinal intérieur Lᵢ de la pale de rotor (6), l'angle de flèche positive β dans le plan de section transversale E_{E} étant de 10° à 30°, de préférence de 20°.

19. Pale de rotor selon l'une des revendications 1 à 18, **caractérisée par** une flèche négative dans le tronçon longitudinal extérieur L_{ä} de la pale de rotor (6) dans le sens de rotation (8).

20. Pale de rotor selon la revendication 19, **caractérisée en ce que** la flèche négative s'étend de façon continue et progressive de E₀ vers E_{E} et se raccorde de façon continue au tronçon longitudinal intérieur Lᵢ de la pale de rotor (6), l'angle de flèche négative Φ dans le plan de section transversale E_{E} étant inférieur à 60°, de préférence égal à 45°.

21. Eolienne, **caractérisée par** une pale de rotor (6) selon l'une des revendications 1 à 20.
